# EUROPÄISCHE PATENTSCHRIFT

(11) **EP 2 987 621 B1**
(45) Veröffentlichungstag und Bekanntmachung des Hinweises auf die Patenterteilung: **07.03.2018**
(21) Anmeldenummer: 15181944.8
(22) Anmeldetag: 21.08.2015
(51) Int. Cl.: B29C 49/68

(54) **VORRICHTUNG MIT AUFSTECKBAREM REFLEKTOR**
APPARATUS WITH PLUGGING REFLECTOR
DISPOSITIF AVEC REFLECTEUR EMBOITABLE

(30) Priorität: 21.08.2014 DE 102014111949
(43) Veröffentlichungstag der Anmeldung: 24.02.2016
(73) Patentinhaber: Krones AG, 93073 Neutraubling (DE)
(72) Erfinder: Haner, Arno, 93073 Neutraubling (DE)
(74) Vertreter: Bittner, Bernhard

(56) Entgegenhaltungen:
- EP-A1- 2 110 225
- EP-A1- 2 216 161
- EP-A1- 2 682 243
- EP-A2- 0 999 724
- WO-A1-2011/006483
- WO-A1-2011/036593
- FR-A1- 2 942 740
- US-B1- 6 361 301

## Beschreibung

Die vorliegende Erfindung betrifft eine Vorrichtung zum Erwärmen von Kunststoffbehältnissen, insbesondere Kunststoffvorformlingen. Aus dem Stand der Technik ist es bekannt, dass sogenannte Kunststoffvorformlinge, insbesondere aus PET, zunächst in einem Ofen erwärmt werden und anschließend im Rahmen eines Blasvorgangs, insbesondere eines Streckblasvorgangs, zu Kunststoffbehältnissen einer gewünschten Endform umgeformt bzw. expandiert werden. Als Heizelemente werden oftmals Infrarotstrahler eingesetzt.

Zur Erhöhung des Wirkungsgrades der Erwärmung durch die verwendete Strahlung ist aus dem Stand der Technik die Verwendung von Reflektoren bekannt. Dazu sind diese derart angeordnet, dass sie nicht auf den Kunststoffvorformling zulaufende Strahlung in Richtung des zu erwärmenden Kunststoffvorformlings reflektieren. Mittels des Einsatzes von Reflektoren ist es nicht nur möglich, den Gesamtwirkungsgrad der Erwärmungsvorrichtung zu steigern, sondern auch gezielt zwischen einzelnen Bereichen des Kunststoffvorformlings hinsichtlich der gewünschten Temperierung genauer differenzieren zu können.

Für den an den Erwärmungsvorgang nachfolgenden erfolgreichen und effizienten Ablauf des Streckblasvorgang kann es nämlich von großer Bedeutung sein, in der Erwärmungsvorrichtung einzelne Bereiche des Kunststoffvorformlings gezielt mit erhöhter Strahlung, andere Bereiche dagegen lediglich mit abgeschwächter Strahlung zu beaufschlagen. So weisen beispielsweise üblicherweise die Kunststoffvorformlinge einen nach oben offenen Mündungsbereich auf, der gewöhnlich als Außengewinde ausgebildet ist und bereits bei der Kunststoffvorformlingherstellung die Form des Mündungsbereichs des fertigen Behältnisses erhält. Während des Blasvorgangs soll somit dieser Bereich gerade nicht expandiert und dadurch deformiert werden. Dazu ist es notwendig, den Mündungsbereich des Kunststoffvorformlings von der Beaufschlagung mit Strahlung in der Erwärmungsvorrichtung weitestgehend auszusparen.
Aus dem Stand der Technik sind Reflektoren bekannt, durch deren spezifische Krümmung der reflektierenden Oberfläche die von den Heizelementen emittierte Strahlung fokussiert werden kann. Aus der DE 10 2010 049 136 A1 ist eine Heizvorrichtung zur Erwärmung von Vorformlingen bekannt, in der ein Rückenreflektor vorgesehen ist, welcher eine Freilegung bzw. Nut aufweist, um möglichst nahe am IR-Strahler angeordnet werden zu können. Aus der EP 2 110 225 A1 ist eine Lampenvorrichtung für die Erwärmung von Vorformlingen für die Herstellung von Behältnissen bekannt, die einen kreisbogenförmig ausgebildeten Reflektor aufweist. Zudem sind beschichtete Strahlungsquellen bekannt.
Aus einer derzeit noch unveröffentlichten Patentanmeldung ist eine Erwärmungseinrichtung bekannt, die eine Reflektoreinrichtung mit einem im Wesentlichen parabelförmig gekrümmten ersten Abschnitt und einem zweiten Abschnitt mit gekrümmtem Verlauf, dessen Krümmungsverlauf sich von dem Krümmungsverlauf des ersten Abschnitts unterscheidet, aufweist.
Zudem sind Linsenstrahler bzw. Parabelstrahler bekannt, deren Glasröhren mit kreisförmigen bzw. ellipsenförmigen Querschnitt derart modifiziert sind, dass ein großer Teil ihrer Innenmantelfläche mit einer reflektierenden Beschichtung versehen ist.

EP2682243, FR2942740 und EP2110225 offenbaren Vorrichtungen nach dem Oberbegriff des Anspruchs 1. Weitere Vorrichtungen werden in US6361301, WO2011006483, EP0999724, EP2216161 und WO2011036593 offenbart. Nachteilig hat sich aus dem Stand der Technik gezeigt, dass separat verbaute Reflektoren, welche also von der Strahlungsquelle beabstandet sind, durch ihren großen Abstand zur Strahlungsquelle und die daraus resultierende große erforderliche Baubreite einen großen Bauraum beanspruchen. Beschichtete Strahler weisen dagegen immer einen runden Querschnitt auf. Der vorliegenden Erfindung liegt daher die Aufgabe zugrunde, eine Erwärmungseinrichtung für einen Kunststoffvorformling zu konstruieren, durch welche eine Reduzierung des Bauraums erreicht wird.
Diese Aufgabe wird erfindungsgemäß durch die Gegenstände des unabhängigen Anspruchs 1 erreicht. Die Vorrichtung zum Erwärmen von Kunststoffvorformlingen weist eine Transporteinrichtung auf, welche die Kunststoffvorformlinge entlang eines vorgegebenen Transportpfades transportiert. Weiterhin weist die Vorrichtung wenigstens eine Erwärmungseinrichtung auf, wobei die Erwärmungseinrichtung wenigstens eine erste Strahlungsquelle aufweist, welche Wärmestrahlung abgibt, sowie wenigstens eine Reflektoreinrichtung, welche wenigstens einen Anteil der von der Strahlungsquelle abgegebenen Wärmestrahlung in Richtung der Kunststoffvorformlinge reflektiert.

Bevorzugt ist die Reflexionskomponente der Reflektoreinrichtung derart bezüglich der Strahlungsquelle und/oder den Kunststoffvorformlingen bzw. deren Transportpfad angeordnet, dass von dieser Reflexionskomponente reflektierte Strahlungsanteile unmittelbar auf die Kunststoffvorformlinge gelangt. Unmittelbar bedeutet hier, dass zumindest ein Teil der von der Strahlungsquelle emittierten Strahlung geradlinig auf die Reflexionskomponente trifft. Unter einer an der Strahlungsquelle bzw. einer Strahlungsquellenhalterung anbringbaren Reflektoreinrichtung wird dabei verstanden, dass die Reflektoreinrichtung beispielsweise einmalig an einer gewünschten Strahlungsquelle bzw. Strahlungsquellenhalterung angebracht wird und sodann fest auf dieser Strahlungsquelle bzw. Strahlungsquellenhalterung verbleibt. Die anbringbare Reflektoreinrichtung kann aber auch mehrmals auf der gleichen oder auch auf unterschiedlichen Strahlungsquellen bzw. Strahlungsquellenhalterungen aufgebracht und wieder abgenommen werden. Dabei kann die anbringbare Reflektoreinrichtung direkt an der Strahlungsquelle angebracht werden, was insbesondere bedeutet, dass die Reflektoreinrichtung an mindestens einem Kontaktbereich an der Strahlungsquelle anliegt bzw. befestigt ist.
Es wird damit eine Vorrichtung zum Erwärmen von Kunststoffvorformlingen vorgeschlagen, bei der die Reflektoreinrichtung an die Strahlungsquelle anbringbar und/oder angebracht ist, und nicht wie beispielsweise im Stand der Technik von der Strahlungsquelle beabstandet ist. Bevorzugt sind die Reflektoreinrichtungen derart ausgestaltet, dass sie zur Anbringung an die Standardstrahlungsquellen geeignet sind. Unter Standardstrahlungsquellen werden Strahlungsquellen bezeichnet, die herkömmlicherweise im Rahmen der Erwärmung von Kunststoffvorformlingen verwendet werden. Dadurch können Vorrichtungen, die derartige Standardstrahlungsquellen aufweisen, mit erfindungsgemäßen Reflektoreinrichtungen nachgerüstet werden.

Die erfindungsgemäße Reflektoreinrichtung stellt somit ein von der Strahlungsquelle separates Bauteil der Erwärmungsvorrichtung dar, das verglichen mit den beabstandeten Reflektoreinrichtungen aus dem Stand der Technik näher an der Strahlungsquelle angeordnet werden kann.

Bevorzugt bestehen die Reflexionskomponente und der Träger nicht aus dem gleichen Material, sondern sind aus unterschiedlichen Materialien hergestellt. Das Trägermaterial weist dabei bevorzugt eine hohe Wärmebeständigkeit auf.

Die Reflexionskomponente weist bevorzugt eine sehr gute Reflektionseigenschaft auf. Durch die Gestaltung des Querschnittsprofils der Reflexionskomponente, also der reflektierenden Oberfläche, kann die Strahlung gezielt ausgerichtet, gebündelt oder fokussiert werden. Die Reflexionskomponente ist bevorzugt durch eine Beschichtung wenigstens eines Bereiches des Trägers erzeugt. Besonders bevorzugt ist daher die Reflexionskomponente durch eine Beschichtung mit Gold und/oder Keramik oder eine behandelte Oberfläche, beispielsweise eine polierte Oberfläche, gegeben.

Da die Reflektoreinrichtung direkt an die Strahlungsquelle angebracht werden kann, befindet sich die Reflexionskomponente nahe an der Strahlungsquelle. Dadurch wird eine hohe Effizienz erreicht. Für eine Reflexionskomponente, die sich in einem größeren Abstand zur Strahlungsquelle befindet, ist eine größere reflektierende Oberfläche erforderlich, um den gleichen Raumwinkel zu reflektierender Strahlung abdecken zu können wie eine Reflexionskomponente in geringerem Abstand. Daraus resultieren zum einen niedrigere Materialkosten, zum anderen ist mit der erfindungsgemäßen Reflektoreinrichtung ein kleinerer Bauraum verglichen mit von der Strahlungsquelle beabstandeten Reflektoreinrichtungen ähnlichen Querschnittsprofils nötig. Bevorzugt können daher verglichen zum Stand der Technik mehr Strahlungsquellen mit jeweils geeigneten Reflektoreinrichtungen in einem Heizkastenangeordnet werden.

Die erfindungsgemäße Vorrichtung stellt außerdem auch insofern eine kostengünstige Lösung der Aufgabe dar, als bevorzugt ein Stangenprofil verwendet werden kann.

Bei der beschriebenen Reflektoreinrichtung ist es zudem möglich, auf eine separate Kühlung zu verzichten, während beispielsweise im Stand der Technik bei Aluminiumreflektoren eine Luft- und/oder Wasserkühlung erforderlich ist.
Bevorzugt emittieren die Strahlungsquellen hauptsächlich Infrarotstrahlung. Vorteilhaft können aber auch Strahlungsquellen eingesetzt werden, deren emittierte Strahlung Anteile im nahinfraroten Bereich (NIR) und/oder Anteile im ferninfraroten Bereich (FIR) enthält. Herkömmlich werden in den Erwärmungsquellen langgestreckte, stabförmige Strahlungsquellen verwendet. Die durch diese langgestreckte Form der Strahlungsquellen ausgezeichnete Richtung wird als Längsrichtung bezeichnet. Bevorzugt stimmt die Längsrichtung mit der Transportrichtung der Kunststoffvorformlinge überein.
Bei einer bevorzugten Ausführungsform weist die Reflexionskomponente in einer senkrecht zu einer Längsrichtung der Strahlungsquelle stehenden Ebene einen vorgegebenen Querschnitt auf, der von einem kreisringsegmentförmigen Querschnitt abweicht. Dadurch wird durch eine geeignete Ausgestaltung des Querschnittsprofils der Reflexionskomponente eine besondere Fokussierung der reflektierten Strahlung und/oder eine Verringerung der Energiedichte der reflektierten Strahlung in bestimmten Bereichen ermöglicht. Dabei kann das Querschnittsprofil der Reflexionskomponente und insbesondere die dadurch gegebene Krümmung ihrer reflektierenden Oberfläche im Gegensatz zum Stand der Technik unabhängig von der Querschnittsform der Strahlungsquelle gewählt werden. Die Reflektoreinrichtungen können an den herkömmlichen stabförmigen Strahlungsquellen mit kreisförmigem Querschnitt angebracht werden. Dadurch wird sowohl eine platzsparende Bauweise ermöglicht, indem sich die Reflexionskomponente sehr nahe an der Strahlungsquelle befindet, als auch eine große Variation an unterschiedlichen Querschnittsprofilen bzw. Krümmungen der Reflexionskomponenten bei Gebrauch der Standardstrahlungsquellen ermöglicht.
Bei einer weiteren vorteilhaften Ausführungsform ist die der Strahlungsquelle zugewandte Oberfläche der Reflexionskomponente derart ausgebildet, dass sie zumindest abschnittsweise einem parabelförmig gekrümmten Verlauf folgt. Der parabelförmig gekrümmte Verlauf liegt bevorzugt in einer Ebene, die senkrecht zur Transportrichtung der Kunststoffvorformlinge steht. Bevorzugt werden die Kunststoffvorformlinge vertikal stehend, also mit ihrer Mündung nach oben, transportiert. Bevorzugt ist damit die anbringbare Reflektoreinrichtung zumindest abschnittsweise als Parabelreflektor ausgestaltet.

Bei einer weiteren vorteilhaften Ausführungsform ist die der Strahlungsquelle zugewandte Oberfläche der Reflexionskomponente derart ausgebildet, dass sie zumindest abschnittsweise einem ellipsenförmig gekrümmten Verlauf folgt. Der ellipsenförmig gekrümmte Verlauf liegt bevorzugt in einer Ebene, die senkrecht zur Transportrichtung der Kunststoffvorformlinge steht. Bevorzugt ist somit die anbringbare Reflektoreinrichtung zumindest abschnittsweise als Ellipsenreflektor ausgestaltet.
Bei einer weiteren vorteilhaften Ausführungsform ist die Strahlungsquelle in einem Brennpunkt der Reflektoreinrichtung angeordnet. In einer solchen Anordnung wird die von der Strahlungsquelle emittierte und auf eine Reflexionskomponente mit parabelförmig gekrümmtem Verlauf treffende Strahlung uniform in Richtung des Kunststoffvorformlings reflektiert.

Bei einer weiteren vorteilhaften Ausführungsform ist die Reflektoreinrichtung an die Strahlungsquelle in Längsrichtung der Strahlungsquelle seitlich aufschiebbar und/oder senkrecht zur Längsrichtung der Strahlungsquelle aufsteckbar und/oder aber aufklebbar, bevorzugt mit hitzebeständigem Klebstoff.
Dadurch können bisher verwendete bzw. herkömmliche Strahlungsquellen bei Bedarf nachgerüstet werden und/oder Reflektoreinrichtungen durch andere Reflektoreinrichtungen mit beispielsweise anderem Querschnittsprofil der Reflexionskomponente ersetzt werden. Zudem ergibt sich aus der erfindungsgemäßen Ausgestaltung der Reflektoreinrichtungen der Vorteil, dass die Strahlungsquellen, etwa wenn sie defekt sind, ausgetauscht und die Reflektoreinrichtungen wiederverwendet werden können. Die Reflektoreinrichtung ist derart an die Strahlungsquelle anbringbar, dass sie in angebrachtem Zustand ein oder zwei Bewegungsfreiheitsgrade aufweist, und beispielsweise um die Längsachse der Strahlungsquelle drehbar und/oder entlang der Längsachse verschiebbar ist. Dies erlaubt beispielsweise eine nachträgliche Justierung.
Bei einer weiteren vorteilhaften Ausführungsform weist die Erwärmungseinrichtung wenigstens eine Strahlungsquellenhalterung und bevorzugt wenigstens zwei Strahlungsquellenhalterungen auf, an der (bzw. an denen) die wenigstens eine erste Strahlungsquelle, insbesondere ein (hinsichtlich einer Längsrichtung der Strahlungsquelle gesehenes) Ende der Strahlungsquelle, angeordnet ist. Bevorzugt ist die Reflektoreinrichtung an der wenigstens einen Strahlungsquellenhalterung (direkt) anbringbar, bevorzugt aufsteckbar oder bevorzugt aufclipsbar. Bevorzugt ist hierdurch die Reflektoreinrichtung mittelbar an der Strahlungsquelle anbringbar. Vorstellbar wäre damit sogar eine derartige Anordnung der Reflektoreinrichtung an der Strahlungsquelle, dass die Reflektoreinrichtung diese bevorzugt nicht kontaktiert, sondern lediglich indirekt über die Strahlungsquellenhalterung mit der Strahlungsquelle verbunden ist. Bevorzugt ist jedoch die Reflektoreinrichtung an wenigstens einer Strahlungsquellenhalterung anbringbar bzw. angeordnet, so dass sie von dieser (stabil) in einer vorgegebenen Position gehalten werden kann bzw. wird, kontaktiert aber dennoch die Strahlungsquelle wenigstens abschnittsweise. Bevorzugt kann damit die Reflektoreinrichtung bzw. der Reflektor auch auf die Halterungen an den Strahlungsquelleenden aufgeclipst werden anstatt direkt auf die Strahlungsquelle selbst.

Bevorzugt sind beide (hinsichtlich einer Längsrichtung der Strahlungsquelle gesehenen) Enden der Strahlungsquelle an wenigstens einer Strahlungsquellenhalterung und bevorzugt jedes Ende an jeweils einer separaten Strahlungsquellenhalterung angeordnet. Dabei können an einer Strahlungsquellenhalterung vorteilhaft mehrere Strahlungsquellen bzw. insbesondere Enden hiervon, bevorzugt übereinander, angeordnet sein.

Bei einer weiteren vorteilhaften Ausführungsform ist das Material des Trägers strahlungsdurchlässig gegenüber wenigstens einem Anteil der zur Erwärmung der Kunststoffvorformlinge vorgesehenen Wärmestrahlung. Bevorzugt befindet sich die Reflexionskomponente bezüglich des Trägers auf der der Strahlungsquelle zugewandten Seite. Eine derartige innenliegende Reflexionskomponente ist somit noch näher an der Strahlungsquelle. Die Reflexionskomponente kann sich aber auch bezüglich des Trägers vorteilhaft auf der der Strahlungsquelle abgewandten Seite befinden. Eine derart außenliegende Reflexionskomponente ist leichter zu kühlen bzw. kann die absorbierte Strahlung besser abgeben.

Bei einer weiteren vorteilhaften Ausführungsform besteht der Träger aus Quarzglas oder weist Quarzglas auf. Dieses Material zeichnet sich durch eine hohe Wärmebeständigkeit aus, die für eine Wahrung der Formstabilität der Reflektoreinrichtung während ihrer Erwärmung durch absorbierte Strahlung vorteilhaft ist. Zudem ist Quarzglas transparent gegenüber infrarotem Licht, was eine hohe Strahlendurchlässigkeit gewährleistet.

Bei einer weiteren vorteilhaften Ausführungsform ist die Reflexionskomponente derart ausgestaltet, dass sie in einer senkrecht zu einer Längsrichtung der Strahlungsquelle stehenden Ebene einen asymmetrischen Querschnitt aufweist. Unter einem asymmetrischen Querschnitt einer Reflexionskomponente wird verstanden, dass die reflektierende Oberfläche der an einer Strahlungsquelle angebrachten Reflexionskomponente in der senkrecht zu einer Längsrichtung der Strahlungsquelle stehenden Ebene nicht achsensymmetrisch bezüglich jeder Gerade durch den Mittelpunkt der Strahlungsquelle ist.

Eine Erwärmungseinrichtung, in welcher eine Reflektoreinrichtung mit einer derart ausgestalteten Reflexionskomponente an der Strahlungsquelle angebracht ist, weist folglich in der senkrecht zu einer Längsrichtung der Strahlungsquelle stehenden Ebene eine asymmetrische Abstrahlcharakteristik auf. Dadurch ist es möglich, einen Bereich der Wandung eines Kunststoffvorformlings mit nahezu keiner Strahlung zu beaufschlagen und gleichzeitig in einen daran anliegenden Bereich eine sehr hohe Energiedichte zu platzieren. Wie eingangs erwähnt, ist eine derartige Eigenschaft insbesondere für die Erwärmung der Vorformlinge im Mündungsbereich der Kunststoffvorformlinge interessant. Während dieser weitestgehend von der Strahlungsbeaufschlagung ausgespart werden soll, soll der unter dem Mündungsbereich befindliche Halsbereich in möglichst definierter Weise erwärmt werden, um einen sauberen Halsauszug zu ermöglichen. Durch eine asymmetrische Ausgestaltung der Reflexionskomponente kann ein Teil der Reflexionskomponente hauptsächlich Strahlung von einem Bereich des Kunststoffvorformlings abhalten und somit das Strahlerfeld verschmälern, während ein weiterer Teil der Reflexionskomponente hauptsächlich gezielt reflektierte Strahlung auf einen weiteren Bereich des Kunststoffvorformlings richtet und dort die Energiedichte wesentlich erhöht.

Bevorzugt kann auch die Reflexionskomponente symmetrisch in einer senkrecht zu einer Längsrichtung der Strahlungsquelle stehenden Ebene ausgestaltet sein und der Träger asymmetrisch ausgestaltet sein.

Bei einer weiteren vorteilhaften Ausführungsform liegt die Reflektoreinrichtung an mindestens zwei Bereichen an der Strahlungsquelle an. Bevorzugt ist der Abstand zwischen dem Träger und der Strahlungsquelle konstant, insbesondere bei außenliegenden Reflexionskomponenten. Es kann aber auch vorteilhaft sein, in wenigstens einem Bereich des Trägers einen größeren Abstand zur Strahlungsquelle vorzusehen, insbesondere im Falle einer innenliegenden Reflexionskomponente, und besonders bevorzugt genau in dem Bereich, an dem die innenliegende Reflexionskomponente an dem Träger anliegt.

Alternativ oder zusätzlich kann die Strahlungsquelle selbst aus Quarzglas mit einer reflektierenden Beschichtung bestehen und ein entsprechendes Querschnittsprofil aufweisen. Dadurch ist die Strahlungsquelle und die Reflektoreinrichtung einteilig ausgebildet. Dabei kann vorteilhaft das Querschnittsprofil wie bei den beschriebenen Ausführungsformen der Reflexionskomponenten ausgeführt sein, um die reflektierte Strahlung gezielt auf definierte Bereiche des Vorformlings zu richten bzw. zu fokussieren. Dabei kann das Querschnittsprofil der Strahlungsquelle und/oder der Reflektoreinrichtung im Wesentlichen V-förmig, W-förmig, U-förmig, sternförmig, dreieckig, rechteckig, kreisförmig, polygonal sein und vorteilhaft zusätzlich mit Ausnehmungen versehen sein. Auch sind Kombinationen aus diesen Querschnitten denkbar.

Weiterhin kann in einer weiteren vorteilhaften Ausführungsform die Erwärmungseinrichtung eine zweite Strahlungsquelle aufweisen. Diese ist bevorzugt in Längsrichtung der zu erwärmenden Kunststoffvorformlingen versetzt zu der ersten Strahlungsquelle angeordnet. Vorteilhaft ist auch die zweite Strahlungsquelle mit einer erfindungsgemäßen Reflektoreinrichtung ausgestattet. Dabei kann sich die jeweilige Ausführungsform, insbesondere im Querschnittsprofil der Reflexionskomponente, unterscheiden.

Vorteilhaft können der Träger und die Reflexionskomponente auch einteilig ausgestaltet sein, und beispielsweise kann dabei die Reflexionskomponente in einer senkrecht zu einer Längsrichtung der Strahlungsquelle stehenden Ebene einen vorgegebenen Querschnitt aufweisen, der von einem kreisringsegmentförmigen Querschnitt abweicht, bzw. ein oben beschriebenes Querschnittsprofil aufweisen.

In einer weiteren vorteilhaften Ausführungsform weist die erfindungsgemäße Vorrichtung zudem eine Kühleinrichtung zum Kühlen der Reflektoreinrichtung, besonders bevorzugt im Falle einer innenliegenden Reflexionskomponente, und/oder eine Kühleinrichtung zum Kühlen der Kunststoffvorformlinge, insbesondere deren Mündungsbereiche, auf. Bevorzugt ist eine solche Kühleinrichtung eine Luft- und/oder Wasserkühlung. Daneben kann auch eine Kühleinrichtung vorgesehen sein, welche die Oberflächen der Kunststoffvorformlinge kühlt, beispielsweise durch Beaufschlagung derselben mit Kühlluft.

Die vorliegende Erfindung ist weiterhin auf eine Erwärmungseinrichtung zum Erwärmen von Kunststoffvorformlingen gerichtet, wobei die Erwärmungseinrichtung wenigstens eine erste Strahlungsquelle aufweist, welche Wärmestrahlung abgibt, sowie wenigstens eine Reflektoreinrichtung, welche wenigstens einen Anteil der von der Strahlungsquelle abgegebenen Wärmestrahlung reflektiert. Weiterhin ist die Reflektoreinrichtung an die Strahlungsquelle anbringbar und weist einen Träger auf und einen an dem Träger an wenigstens einem Bereich anliegende Reflexionskomponente, welche zur Reflexion der Strahlung geeignet ist. Dabei kann die Erwärmungseinrichtung mit allen obig im Kontext der Erwärmungsvorrichtung beschriebenen Merkmalen ausgestattet sein.
Weitere Vorteile und Ausführungsformen ergeben sich aus den beigefügten Zeichnungen.
Darin zeigen:
- Fig. 1: Eine Vorrichtung zum Erwärmen von Kunststoffvorformlingen;
- Fig. 2a - c: drei Querschnittsdarstellungen einer an einer Strahlungsquelle angebrachten Reflektoreinrichtung; und
- Fig. 3: eine Querschnittsdarstellung zu einer vorteilhaften Einsatzmöglichkeit der Reflektoreinrichtung gemäß Fig. 2b.

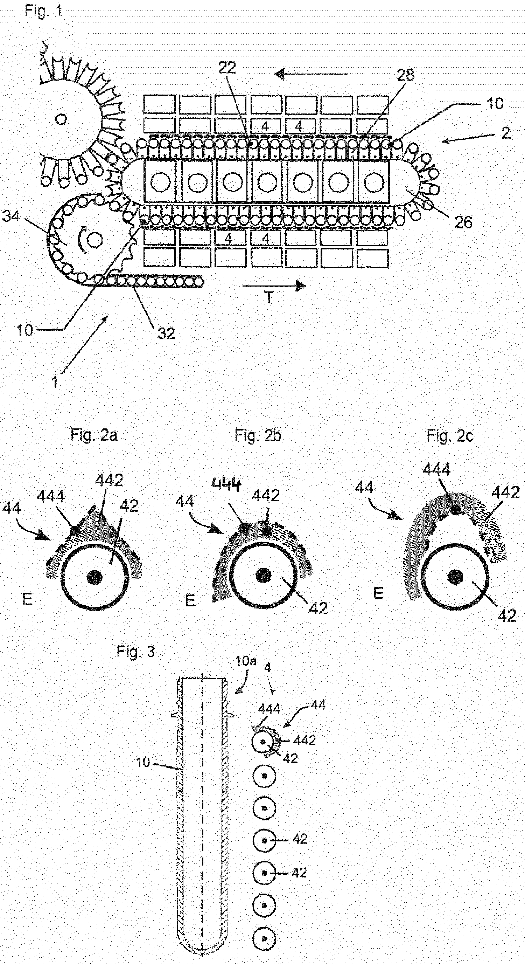

Fig. 1 zeigt eine schematische Darstellung einer erfindungsgemäßen Vorrichtung 1. Dabei werden Kunststoffvorformlinge 10 über eine Zuführeinrichtung 32 zunächst einer Vereinzelungseinrichtung 34, die beispielsweise einen Sägezahnstern enthalten kann, zugeführt und dort vereinzelt. Die vereinzelten Kunststoffvorformlinge 10 werden sodann an Erwärmungseinrichtungen 4 vorbeigeführt, welche entlang des Transportpfades T seitlich bezüglich der transportierten Kunststoffvorformlinge 10 angeordnet sind. Dabei bezieht sich das Bezugszeichen 2 in seiner Gesamtheit auf eine Transporteinrichtung, die die Kunststoffvorformlinge 10 auf einem Transportpfad T fördert. Das Bezugszeichen 26 bezieht sich auf eine Umlenkeinrichtung, wie ein Umlenkrad, um welche die Kunststoffvorformlinge 10 herumgeführt werden, um anschließend wieder abschnittsweise entlang geradliniger Bahnen transportiert zu werden, an denen die Erwärmungseinrichtungen 4 angeordnet sind. Das Bezugszeichen 22 kennzeichnet eine Dreheinrichtung zum Drehen der Kunststoffvorformlinge 10 um ihre eigene Längsachse. Das Bezugszeichen 28 bezieht sich auf Halteeinrichtungen zum Halten der Kunststoffvorformlinge. Diese Halteeinrichtungen können Dorne aufweisen, welche in die Mündungen der Kunststoffvorformlinge eingreifen.

Die Figuren 2a - 2c sind Querschnittsdarstellungen von einer Reflektoreinrichtung 44, die an einer Strahlungsquelle 42 angebracht ist, in jeweils verschiedenen Ausführungsformen. Dabei erstreckt sich die dargestellte Strahlungsquelle 42 in ihrer Längsrichtung L senkrecht zur Figurenebene. Die gezeigte Querschnittsebene, d.h. die Figurenebene, entspricht somit einer senkrecht zu der Längsrichtung L der Strahlungsquelle 42 stehende Ebene E.
Die Reflektoreinrichtung 44 weist einen Träger 442 sowie eine an dem Träger 442 anliegende Reflexionskomponente 444 auf. Dabei kann der Träger 442 bezüglich der Reflexionskomponente 444 sowohl auf der der Strahlungsquelle 42 zugewandten Seite (siehe Fig. 2a und 2b), als auch auf der der Strahlungsquelle 42 abgewandten Seite (siehe Fig. 2c) angeordnet sein. In den beiden ersten Ausführungsformen durchdringt die von der Strahlungsquelle 42 in Richtung der Reflektoreinrichtung 44 emittierte Strahlung zunächst den für wenigstens einen Teil des Emissionsspektrums transparenten Träger 442 und wird sodann an der Reflexionskomponente 444 in Richtung des Kunststoffvorformlings 10 reflektiert.
Im Vergleich zu Reflektoreinrichtungen aus dem Stand der Technik, die von der Strahlungsquelle 42 beabstandet sind, zeichnen sich die erfindungsgemäßen Reflektoreinrichtungen 44 aufgrund ihres geringen Abstands zur Strahlungsquelle 42 durch eine sehr schmale Ausführungsform aus. Zudem besteht trotz dieser sehr schmalen Ausführungsform dennoch ein ausreichend großer Gestaltungsspielraum für eine anwendungsspezifisch angepasste Ausgestaltung des Querschnittsprofils, wodurch sie den beschichteten Strahlungsquellen aus dem Stand der Technik (mit vorgegebenem kreisförmigen oder ellipsenförmigen Querschnittsprofil) für eine gezielte Richtung und/oder Fokussierung der reflektierten Strahlung und damit in Hinblick auf eine gezielte Gestaltung des Strahlungsfeldes vorzuziehen sind.

Fig. 2a (nicht Teil der Erfindung) zeigt eine Reflektoreinrichtung 44, deren Reflexionskomponente 444 abschnittsweise ebene Flächen aufweist, die in ihrer Querschnittsdarstellung einem abschnittsweise geradlinigen Verlauf entsprechen. Die in Fig. 2b illustrierte Reflektoreinrichtung 44 ist mit einer Reflexionskomponente 444 mit asymmetrischem Querschnitt ausgestattet. Eine weitere Ausführungsform einer erfindungsgemäßen Reflektoreinrichtung 44 zeichnet sich durch einen weitgehend parabelförmigen Verlauf der Reflexionskomponente 444 aus und ist in Fig. 2c gezeigt.
Fig. 3 veranschaulicht eine vorteilhafte Einsatzmöglichkeit der Reflektoreinrichtung 44 gemäß Fig. 2b. Zusätzlich zu einer Strahlungsquelle 42 mit dieser Reflektoreinrichtung 44 enthält die gezeigte Erwärmungseinrichtung 4 mehrere weitere Strahlungsquellen 42, die ebenfalls mit erfindungsgemäßen Reflektoreinrichtungen 44 ausgestattet sein können. Um eine direkte Beaufschlagung des Mündungsbereichs 10a des Kunststoffvorformlings 10 durch die von der nächstgelegenen Strahlungsquelle 42 emittierte Strahlung weitestgehend verhindern zu können, kann der obere Teil der erfindungsgemäßen Reflexionskomponente 444 weiter über die Strahlungsquelle 42 gezogen sein als beispielsweise der untere Teil der Reflexionskomponente 444.

## Patentansprüche

1. Vorrichtung (1) zum Erwärmen von Kunststoffvorformlingen (10), mit einer Transporteinrichtung (2), welche die Kunststoffvorformlinge (10) entlang eines vorgegebenen Transportpfades (P) transportiert, mit wenigstens einer Erwärmungseinrichtung (4), wobei die Erwärmungseinrichtung (4) wenigstens eine erste Strahlungsquelle (42) aufweist, welche Wärmestrahlung abgibt, sowie wenigstens eine Reflektoreinrichtung (44), welche wenigstens einen Anteil der von der Strahlungsquelle (42) abgegebenen Wärmestrahlung in Richtung der Kunststoffvorformlinge (10) reflektiert, wobei die Reflektoreinrichtung (44) direkt an die Strahlungsquelle (42) angebracht ist und einen Träger (442) aufweist und eine an dem Träger (442) an wenigstens einem Bereich anliegende Reflexionskomponente (444), welche zur Reflexion der Strahlung geeignet ist,
**dadurch gekennzeichnet, dass**
die der Strahlungsquelle (42) zugewandte Oberfläche der Reflexionskomponente (444) zumindest abschnittsweise einem parabelförmig gekrümmten Verlauf folgt, und die Strahlungsquelle (42) in einem Brennpunkt der Reflektoreinrichtung (44) angeordnet ist, oder
die Reflexionskomponente (444) in einer senkrecht zu einer Längsrichtung (L) der Strahlungsquelle (42) stehenden Ebene (E) einen asymmetrischen Querschnitt aufweist.

2. Vorrichtung (1) nach Anspruch 1,
**dadurch gekennzeichnet, dass**
die Reflexionskomponente (444) in einer senkrecht zu einer Längsrichtung (L) der Strahlungsquelle (42) stehenden Ebene (E) einen vorgegebenen Querschnitt aufweist, der von einem kreisringsegmentförmigen Querschnitt abweicht.

3. Vorrichtung (1) nach wenigstens einem der vorhergehenden Ansprüche,
**dadurch gekennzeichnet, dass**
die der Strahlungsquelle (42) zugewandte Oberfläche der Reflexionskomponente (444) zumindest abschnittsweise einem ellipsenförmig gekrümmten Verlauf folgt

4. Vorrichtung (1) nach wenigstens einem der vorhergehenden Ansprüche,
**dadurch gekennzeichnet, dass**
die Reflektoreinrichtung (44) an die Strahlungsquelle (42) in Längsrichtung der Strahlungsquelle (42) seitlich aufschiebbar oder senkrecht zur Längsrichtung der Strahlungsquelle aufsteckbar oder aber aufklebbar ist.

5. Vorrichtung (1) nach wenigstens einem der vorhergehenden Ansprüche,
**dadurch gekennzeichnet, dass**
die Erwärmungseinrichtung (4) wenigstens eine Strahlungsquellenhalterung aufweist, an der die wenigstens eine erste Strahlungsquelle (42), insbesondere ein Ende der Strahlungsquelle (42), angeordnet ist.

6. Vorrichtung (1) nach Anspruch 5,
**dadurch gekennzeichnet, dass**
die RefleKtoreinrichtung (44) an der wenigstens einen Strahlungsquellenhalterung anbringbar, aufsteckbar oder aufclipsbar ist.

7. Vorrichtung (1) nach wenigstens einem der vorhergehenden Ansprüche,
**dadurch gekennzeichnet, dass**
das Material des Trägers (442) strahlungsdurchlassig gegenüber wenigstens einem Anteil der zur Erwärmung der Kunststoffvorformlinge (10) vorgesehenen Wärmestrahlung ist.

8. Vorrichtung (1) nach wenigstens einem der vorhergehenden Ansprüche,
**dadurch gekennzeichnet. dass**
der Träger (442) aus Quarzglas besteht.

9. Vorrichtung (1) nach wenigstens einem der vorhergehenden Ansprüche,
**dadurch gekennzeichnet, dass**
die Reflektoreinrichtung (44) an mindestens zwei Bereichen an der Strahlungsquelle (42) anliegt.

## Claims

1. Apparatus (1) for heating plastic parisons (10), with a transport device (2) which transports the plastic parisons (10) along a predetermined transport path (P), and with at least one heating device (4), wherein the heating device (4) has at least one first radiation source (42) which emits thermal radiation as well as at least one reflector device (44) which reflects at least a proportion of the thermal radiation emitted by the radiation source (42) in the direction of the plastic parisons (10), wherein the reflector device (44) is attached to the radiation source (42) and has a support (442) and a reflection component (444) which bears against the support (442) on at least one region and is suitable for reflection of the radiation,
**characterized in that**
the surface of the reflection component (444) facing the radiation source (42) follows a parabolically curved path at least in sections, and the radiation source (42) is disposed in a focal point of the reflector device (44), or
the reflection component (444) has an asymmetrical cross-section in a plane (E) perpendicular to a longitudinal direction (L) of the radiation source (42).

2. Apparatus (1) according to claim 1,
**characterised in that**
the reflection component (444) has a predetermined cross-section which deviates from a cross-section in the shape of a circular ring segment in a plane (E) perpendicular to a longitudinal direction (L) of the radiation source (42).

3. Apparatus (1) according to at least one of the preceding claims,
**characterised in that**
the surface of the reflection component (444) facing the radiation source (42) follows an elliptically curved configuration at least in sections.

4. Apparatus (1) according to at least one of the preceding claims,
**characterised in that**
the reflector device (44) can be pushed laterally onto the radiation source (42) in the longitudinal direction of the radiation source (42) or can be fitted on or adhered perpendicular to the longitudinal direction of the radiation source.

5. Apparatus according to at least one of the preceding claims,
**characterised in that**
the heater (4) has at least one radiation source mounting on which the at least one first radiation source (42), in particular one end of the radiation source (42), is disposed.

6. Apparatus according to claim 5,
**characterised in that**
the reflector device (44) can be attached to, fitted on or clipped onto the at least one radiation source mounting.

7. Apparatus (1) according to at least one of the preceding claims,
**characterised in that**
the material of the support (442) is radiation-permeable relative to at least a proportion of the thermal radiation provided for heating the plastic parisons (10).

8. Apparatus (1) according to at least one of the preceding claims,
**characterised in that**
the support (442) is made of quartz glass.

9. Apparatus (1) according to at least one of the preceding claims,
**characterised in that**
the reflector device (44) bears against the radiation source (42) on at least two regions.

## Revendications

1. Système (1) de chauffage d'ébauches en matière plastique (10), comprenant un dispositif de transport (2), lequel transporte les ébauches en matière plastique (10) le long d'un trajet de transport (P) prédéfini, comprenant au moins un dispositif de chauffage (4), dans lequel le dispositif de chauffage (4) comprend au moins une première source de rayonnement (42), laquelle délivre un rayonnement thermique, ainsi qu'au moins un dispositif réflecteur (44), lequel réfléchit au moins une partie du rayonnement thermique délivré par la source de rayonnement (42) en direction des ébauches en matière plastique (10), dans lequel le dispositif réflecteur (44) étant monté directement sur la source de rayonnement (42) et comprend un support (442) et un composant de réfléchissement (444) s'appliquant sur le support (442) au niveau d'au moins une zone et adapté à réfléchir le rayonnement,
**caractérisé en ce que**
la surface du composant de réfléchissement (444) tournée vers la source de rayonnement (42) suit au moins partiellement une trajectoire courbée en forme de parabole, et la source de rayonnement (42) est agencée dans un foyer du dispositif réflecteur (44), ou
le composant de réfléchissement (444) présente dans un plan (E) perpendiculaire à une direction longitudinale (L) de la source de rayonnement (42) une section transversale asymétrique.

2. Système (1) selon la revendication 1,
**caractérisé en ce que**
le composant de réfléchissement (444) présente dans un plan (E) perpendiculaire à une direction longitudinale (L) de la source de rayonnement (42) une section transversale prédéfinie qui est différente d'une section transversale en forme de segment d'anneau circulaire.

3. Système (1) selon au moins l'une des revendications précédentes,
**caractérisé en ce que**
la surface du composant de réfléchissement (444) tournée vers la source de rayonnement (42) suit au moins partiellement une trajectoire courbée en forme d'ellipse.

4. Système (1) selon au moins l'une des revendications précédentes,
**caractérisé en ce que**
le dispositif réflecteur (44) peut être poussé latéralement sur la source de rayonnement (42) dans la direction longitudinale de la source de rayonnement (42) ou être fixé ou bien collé perpendiculairement à la direction longitudinale de la source de rayonnement.

5. Système (1) selon au moins l'une des revendications précédentes,
**caractérisé en ce que**
le dispositif de chauffage (4) comprend au moins un élément de retenue de source de rayonnement sur lequel ladite au moins une première source de rayonnement (42), en particulier une extrémité de la source de rayonnement (42), est agencée.

6. Système (1) selon la revendication 5,
**caractérisé en ce que**
le dispositif réflecteur (44) peut être monté, fixé ou clipsé sur ledit au moins un élément de retenue de source de rayonnement.

7. Système (1) selon au moins l'une des revendications précédentes,
**caractérisé en ce que**
le matériau du support (442) est transparent au rayonnement vis-à-vis d'au moins une partie du rayonnement thermique destiné à chauffer les ébauches en matière plastique (10).

8. Système (1) selon au moins l'une des revendications précédentes,
**caractérisé en ce que**
le support (442) est constitué de verre de quartz.

9. Dispositif (1) selon au moins l'une des revendications précédentes,
**caractérisé en ce que**
le dispositif réflecteur (44) s'applique contre la source de rayonnement (42) au niveau d'au moins deux zones.
